# EUROPÄISCHE PATENTANMELDUNG

(11) **EP 3 263 404 A1**
(43) Veröffentlichungstag der Anmeldung: **03.01.2018**
(21) Anmeldenummer: 17178648.6
(22) Anmeldetag: 29.06.2017
(51) Int. Cl.: B60Q 1/04, B60R 21/34

(54) **BELEUCHTUNGSEINRICHTUNG FÜR EINE FRONT EINES KRAFTFAHRZEUGS**

(30) Priorität: 01.07.2016 DE 102016112067
(71) Anmelder: Automotive Lighting Reutlingen GmbH, 72762 Reutlingen (DE)
(72) Erfinder: Bathe, Achim, 72768 Reutlingen (DE); Jauernig, Peter, 72770 Reutlingen (DE); Schubert, Uwe, 73207 Plochingen (DE); Schwemmer, Judith, 72379 Hechingen (DE)
(74) Vertreter: DREISS Patentanwälte PartG mbB

(57) **Zusammenfassung**

Es wird eine Beleuchtungseinrichtung (2) für eine Front eines Kraftfahrzeugs vorgeschlagen. Die Beleuchtungseinrichtung (2) umfasst eine Befestigungsvorrichtung (30) zur Befestigung der Beleuchtungseinrichtung (2) an dem Kraftfahrzeug und einen crash-relevanten Bereich (4). Die Befestigungsvorrichtung (30) und der crash-relevante Bereich (4) sind derart aufeinander abgestimmt, dass zu einer Verformung des crash-relevanten Bereichs (4) eine geringere Formänderungsarbeit aufzubringen ist als zu einer Verformung der Befestigungsvorrichtung (30).

## Beschreibung

Die Erfindung betrifft eine Beleuchtungseinrichtung für eine Front eines Kraftfahrzeugs nach dem Oberbegriff des Anspruchs 1.

Scheinwerfer, die den Fußgängerschutz verbessern, sind allgemein bekannt. Steigende gesetzliche Anforderungen fordern eine weitere Erhöhung der Sicherheit zum Schutze von Fußgängern.

Aus der DE 101 43 676 A1 ist ein Kraftfahrzeugscheinwerfer bekannt, bei dem sich rückwärts erstreckende Seitenwände einer Abdeckscheibe bei einer Krafteinwirkung auf die Vorderfläche der Abdeckscheibe relativ zu den sich vorwärts erstreckenden Seitenwänden eines Gehäuses unter Überwindung von Reibungskräften teleskopartig verschiebbar sind.

Aus der EP 1 645 799 A1 ist ein Kraftfahrzeugscheinwerfer bekannt, bei dem bei einem Fußgängeraufprall eine Verschiebung von mindestens einem Teil des optischen Moduls geschieht.

Aus der DE 20 2005 016 777 U1 ist eine Befestigungsanordnung bekannt, bei der ein Deformationselement und ein Befestigungselement integral miteinander verbunden sind. Die Befestigungsanordnung umfasst ein Anbauteil, das ein Scheinwerfer sein kann.

Die DE 10 2005 057 831 A1 offenbart einen Scheinwerfer für ein Kraftfahrzeug, bei dem ein Dichtbett mit einem Gehäuse über eine Solldeformationslinie verbunden ist und die Solldeformationslinie durch einen Knick zwischen Gehäuse und Dichtbett realisiert ist.

Mithin ist es Aufgabe der Erfindung, das Verletzungsrisiko beim Aufprall eines Fußgängers oder aber Radfahrers auf eine Beleuchtungseinrichtung an einer Front eines Kraftfahrzeugs zu verringern und gleichzeitig die Funktionalität und Lebensdauer der Beleuchtungseinrichtung zu gewährleisten.

Die der Erfindung zugrunde liegende Aufgabe wird nach dem Anspruch 1 gelöst. Vorteilhafte Weiterbildungen sind in den Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Dadurch, dass eine Befestigungsvorrichtung und ein crash-relevanter Bereich derart aufeinander abgestimmt sind, dass zu einer Verformung des crash-relevanten Bereichs eine geringere Formänderungsarbeit aufzubringen ist als zu einer Verformung der Befestigungsvorrichtung, wird vorteilhaft erreicht, dass ein großer Eindringweg bei einem Zusammenstoß mit einem Fußgänger bzw. Radfahrer bereitgestellt wird. Durch die Bereitstellung großer Eindringwege bzw. großer Eindringtiefen in die Beleuchtungseinrichtung können in dem crash-relevanten Bereich der Beleuchtungseinrichtung hohe Aufprallenergien absorbiert werden.

Insbesondere wird durch die Stabilität der Befestigungsvorrichtung keine Aufprallenergie aufgewendet, um im Bereich der Befestigungsvorrichtung eine Formänderung herbeizuführen, wodurch mehr Energie des Aufpralls in dem crash-relevanten Bereich zur gezielten Verformung des crash-relevanten Bereichs bereitsteht. Insofern wirkt die Beleuchtungseinrichtung durch die crash-feste Befestigung als ein Gegenlager, wodurch die Aufprallenergie gezielt im crash-relevanten Bereich absorbierbar ist.

Durch die stabile Befestigung wird darüber hinaus erreicht, dass sich die Beleuchtungseinrichtung bei einem Unfall mit einem Fußgänger nicht aus der vorgegebenen Position herausbewegt und somit ein reproduzierbares Crashverhalten erreichbar ist. Es wird durch die stabile Befestigung auch verhindert, dass andere Anbauteile des Kraftfahrzeugs freigelegt werden, und sich nachteilig auf das Unfallverhalten der Beleuchtungseinrichtung bzw. des Kraftfahrzeugs auswirken.

Des Weiteren wird durch die erhöhte Formänderungsarbeit für die Verformung der Befestigungsvorrichtung erreicht, dass die Masseträgheit und damit die Masse des gesamten Scheinwerfers zur Absorption der Aufprallenergie eine eher untergeordnete Rolle spielt.

Des Weiteren erhöht sich durch die vorgeschlagene Festigkeit der Befestigungsvorrichtung deren Lebensdauer, da beispielsweise das Überfahren von Schlaglöchern nicht zur Beschädigung der Scheinwerferbefestigung am Fahrzeug führt. Auch das Resonanzverhalten des Scheinwerfers in Zusammenhang mit dem Fahrzeug wird verbessert und bewirkt einen grundsätzlich ruhigeren vom Scheinwerfer abgestrahlten Lichtkegel.

Des Weiteren ist es durch den vorgeschlagenen Scheinwerfer nunmehr möglich, bisher für einen Unfall vorgesehene Freiräume hinter oder unter dem Scheinwerfer entfallen zu lassen, wodurch Bauraum im Bereich der Fahrzeugfront frei wird.

In einer vorteilhaften Ausführungsform ist zu der Verformung eines Crash-Lastpfades des crash-relevanten Bereichs eine geringere Formänderungsarbeit aufzubringen, als zur Verformung der Befestigungsvorrichtung. Der Crash-Lastpfad nimmt vorteilhaft die Aufprallenergie durch eine plastische und/oder elastische Verformung auf und leitet die Aufprallenergie so dosiert in die Beleuchtungseinrichtung ein.

In einer vorteilhaften Ausführungsform ist der crash-relevante Bereich entlang des Crash-Lastpfads aufbrechbar. Durch das Aufbrechen des crash-relevanten Bereichs können hohe Eindringtiefen erreicht werden, die zur Aufnahme von Aufprallenergie zur Verfügung stehen.

In einer vorteilhaften Ausführungsform greift die Befestigungsvorrichtung an einem nicht crash-relevanten Bereich zur Verbindung der Beleuchtungseinrichtung mit dem Kraftfahrzeug an. Damit ist die Befestigungsvorrichtung vorteilhaft außerhalb des crash-relevanten Bereichs angeordnet, womit bei einem Aufprall im Bereich des crash-relevanten Bereichs die Beleuchtungseinrichtung sicher am Fahrzeug befestigt bleibt. Insbesondere bildet dadurch der nicht crash-relevante Bereich ein Gegenlager bei dem Aufprall, wodurch die hohen Eindringtiefen und die feste Verankerung der Beleuchtungseinrichtung in dem Kraftfahrzeug gewährleistet werden.

In einer vorteilhaften Ausführungsform ist mittels der Befestigungsvorrichtung an einem Gehäuse der Beleuchtungsvorrichtung die Beleuchtungsvorrichtung crash-fest mit dem Kraftfahrzeug verbindbar. Durch diese crash-feste Verbindung wird die feste Verankerung der Beleuchtungsvorrichtung am Fahrzeug während eines Aufpralls eines Fußgängers gewährleistet.

In einer vorteilhaften Weiterbildung ist die Befestigungsvorrichtung Teil des Gehäuses. Hierdurch entfallen weitere Verbindungselemente zwischen der Befestigungsvorrichtung und dem Gehäuse und eine Kraftableitung vom Gehäuse an das Kraftfahrzeug wird verbessert.

In einer vorteilhaften Ausführungsform ist ein erster Teil der Gesamtmasse der Beleuchtungseinrichtung, der auf den nicht crash-relevanten Bereich der Beleuchtungseinrichtung entfällt, größer als ein zweiter Teil der Gesamtmasse der Beleuchtungseinrichtung, der auf den crash-relevanten Bereich entfällt. Durch diese Anordnung von Bauteilen mit einer hohen Masse innerhalb der Beleuchtungseinrichtung in dem nicht crash-relevanten Bereich muss bei einem Aufprall in dem crash-relevanten Bereich keine hohe Masse verschoben werden und somit kann eine hohe Eindringtiefe bei geringer Gegenmasse erreicht werden.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Für funktionsäquivalente Größen und Merkmale werden in allen Figuren auch bei unterschiedlichen Ausführungsformen die gleichen Bezugszeichen verwendet.

Nachfolgend werden beispielhafte Ausführungsformen der Erfindung unter Bezugnahme auf die Zeichnung erläutert. In der Zeichnung zeigen:
- Figur 1: eine schematische Schnittdarstellung einer Beleuchtungseinrichtung für ein Kraftfahrzeug;
- Figur 2: eine schematisch dargestellte Aufprallsituation bei einer Beleuchtungseinrichtung nach dem Stand der Technik; und
- Figur 3: eine schematisch dargestellte Aufprallsituation bei der Beleuchtungseinrichtung nach der Figur 1.

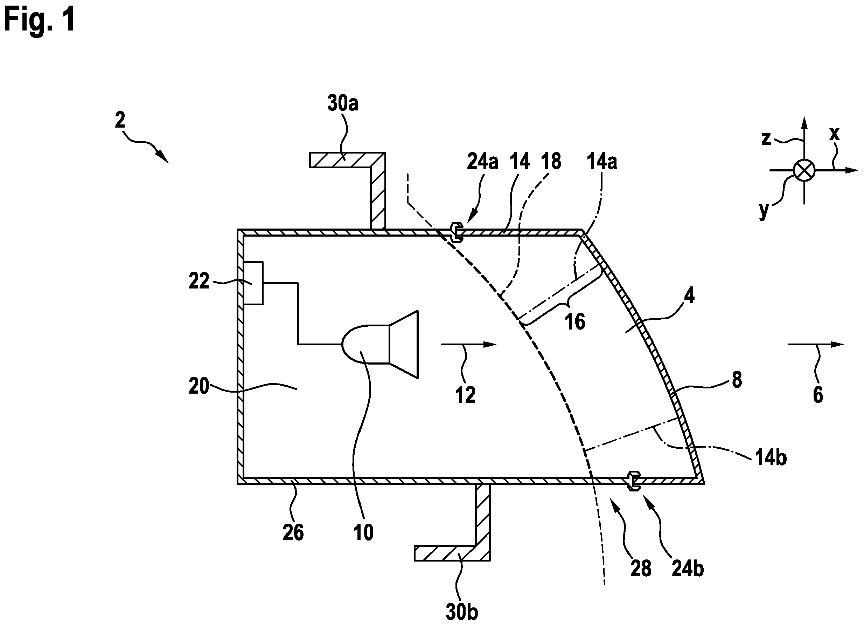

Figur 1 zeigt in schematischer Form einen Schnitt durch eine Beleuchtungseinrichtung 2 in Form eines Scheinwerfers. Die Beleuchtungseinrichtung 2 ist zur Anordnung an einer Front eines Kraftfahrzeugs vorgesehen. Ein crash-relevanter Bereich 4 umfasst ein in eine Fahrtrichtung 6 orientiert angeordnetes Volumen. Der crash-relevante Bereich 4 umfasst eine Abdeckscheibe 8, die im Wesentlichen transparent und damit durchlässig für ein von einem Leuchtmodul 10 ausgesandten Licht 12 ausgebildet ist. So verläuft die Abdeckscheibe 8 beispielsweise zumindest abschnittsweise entlang einer gekrümmten Fläche.

Der crash-relevante Bereich 4 umfasst entweder keine weiteren Elemente der Beleuchtungseinrichtung 2. Wenn Elemente in dem crash-relevanten Bereich 4 vorhanden sind, so weisen diese ein definiertes Verhalten im Falle eines Aufpralls auf. So ist es beispielsweise denkbar, dass die in dem crash-relevanten Bereich 4 angeordneten Elemente im Sinne eines Crash-Lastpfades Soll-Bruchstellen oder stark verjüngte Strukturen aufweisen, um bei einem Aufprall aufzubrechen.

Der crash-relevante Bereich 4 umfasst zumindest einen Crash-Lastpfad 14, wie in Figur 1 schematisch dargestellt, der eine Eindringtiefe 16 für den Fußgängerschutz bereitstellt. Der Crash-Lastpfad 14 wird beispielsweise durch optisch wirksame Elemente oder Zierelemente gebildet und umfasst eine Reduktion der Geometriesteifigkeit im Bereich 4, beispielsweise durch eine Sollbruchlinie, eine Materialausdünnung, eine Rasterlinie, einen spritz- oder heißnadelgeprägte Bereich und/oder eine SollDeformationslinie. Selbstverständlich muss ein Crash-Lastpfad 14 nicht linienförmig, wie schematisch in Figur 1 dargestellt, verlaufen, sondern kann ohne weiteres den Vorgaben der Optik- und Zierelemente angepasst werden. So sind beispielsweise abschnittsweise lotrecht zur Fahrtrichtung 6 verlaufende Strukturen oder abschnittsweise in einem Winkel zur Fahrtrichtung 6 verlaufende Strukturen in dem crash-relevanten Bereich 4 angeordnet und dazu ausgebildet, Kräfte, die von einem Aufprall herrühren, aufzunehmen. Das bedeutet zum einen, dass diese Strukturen bei einem ersten Wert einer Aufprallkraft nachgeben oder brechen. Zum anderen sind diese Strukturen so ausgebildet, dass diese einer Aufprallkraft eine maximale Kraft mit einem zweiten Wert entgegensetzen. Hierbei ist der zweite Wert größer oder gleich dem ersten Wert.

Des Weiteren sind die Strukturen bzw. Elemente in dem crash-relevanten Bereich 4 so angeordnet, dass diese ineinander gleiten bzw. in Freiräume des nicht crash-relevanten Bereichs 20 oder der crash-relevanten Bereichs 4 eintauchen, um im Falle eines Aufpralls eine Blockbildung zu vermeiden.

Eine gedachte, gekrümmte Fläche 18, welche vorliegend als unterbrochene Linie dargestellt ist, trennt den crash-relevanten Bereich 4 von einem nicht crash-relevanten Bereich 20 der Beleuchtungseinrichtung 2 ab. Das bedeutet, dass Strukturen des crash-relevanten Bereichs 4 zur Herstellung eines Lastpfads 14 in den nicht crash-relevanten Bereich 20 hineinragen dürfen. Auf der anderen Seite dürfen Elemente, welche grundsätzlich dem nicht crash-relevanten Bereich 20 zugeordnet sind, nicht in den crash-relevanten Bereich 4 hineinragen. In dem nicht crash-relevanten Bereich 20 sind das Leuchtmodul 10 und ein entsprechendes Steuergerät 22 sowie nicht gezeigte Kühlelemente angeordnet.

Der nicht crash-relevante Bereich 20 umfasst ein entgegen der Fahrtrichtung 6 angeordnetes Volumen der Beleuchtungseinrichtung 2. Die gekrümmte Fläche 18 folgt im Wesentlichen einer gekrümmten Fläche durch die Abdeckscheibe 8 und ist in Fahrtrichtung 6 gleich weit von der gekrümmten Fläche durch die Abdeckscheibe 8 beabstandet. Bei einem Aufprall eines Prüfkörpers auf die Beleuchtungseinrichtung 2 dringt der Prüfkörper derart in den crash-relevanten Bereich 4 ein, so dass der Prüfkörper stets einer maximalen Kraft ausgesetzt ist, welche beispielsweise in einer Prüfvorschrift festgelegt ist.

Die Strukturen, d.h. Elemente, die einen jeweiligen Crash-Lastpfad 14 oder einen Teil davon bereitstellen, können an dem Gehäuse 26 oder einem Element innerhalb des crash-relevanten Bereichs 4 oder innerhalb des nicht crash-relevanten Bereichs 20 angreifen.

In einer bevorzugten Ausführungsform sind das Leuchtmodul 10 und/oder das Steuergerät 22 und/oder Kühlelemente in einem hinteren unteren Bereich der Beleuchtungseinrichtung 2 angeordnet, das bedeutet, in einem entgegen der Fahrtrichtung orientierten und in Richtung Fahrzeugunterseite orientierten Bereich, d.h. entgegen einer x-Richtung und entgegen einer z-Richtung. In dieser Ausführungsform sind die Elemente mit hoher Masse, d.h. das Leuchtmodul 10, das Steuergerät 22 und ein oder mehrere Kühlelemente in dem nicht crash-relevanten Bereich 20 der Beleuchtungseinrichtung 2 angeordnet, der bei einem Aufprall eines Impaktors bzw. eines Fußgängers diesem gegenüberliegt.

In Verbindungsbereichen 24 ist die Abdeckscheibe 8 mit dem Gehäuse 26 der Beleuchtungseinrichtung 2 verbunden. Ein Bereich 28 des Gehäuses 26 ist beispielsweise Teil des crash-relevanten Bereichs 4.

In dem nicht crash-relevanten Bereich 20 der Beleuchtungseinrichtung 2 ist eine Befestigungsvorrichtung 30 zu einer crash-festen Verbindung der Beleuchtungseinrichtung 2 mit der Karosserie des Kraftfahrzeugs angeordnet. Beispielhaft sind zwei Befestigungsvorrichtungen 30 gezeigt, es können selbstverständlich auch drei oder mehr Befestigungsvorrichtungen 30 vorgesehen werden, um die Beleuchtungseinrichtung 2 mit dem Kraftfahrzeug zu verbinden.

Die Crash-Lastpfade 14 sind so ausgestaltet, dass die Formänderungsarbeit, die zur Verformung des crash-relevanten Bereichs 4 aufzubringen ist, geringer ist als die Formänderungsarbeit zur Verformung der Befestigungsvorrichtung und/oder zur Verformung des nicht crash-relevanten Bereichs 20.

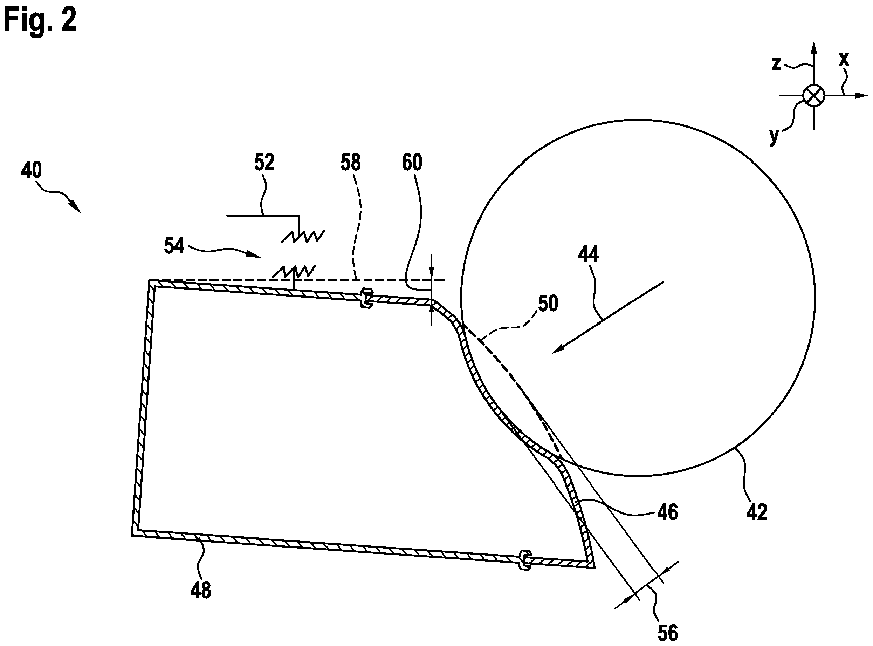

Figur 2 zeigt einen Scheinwerfer 40 nach dem Stand der Technik bei einer Aufprallsituation. Ein Prüfimpaktor 42, der die physikalischen Eigenschaften eines Kinderkopfs besitzt, trifft in einer Aufprallrichtung 44 auf eine Abdeckscheibe 46, die an einem Gehäuse 48 befestigt ist. Der Aufprall des Prüfimpaktors 42 führt zu einer Verformung der Abdeckscheibe 46, was durch die gestrichelte Linie 50 dargestellt ist, wobei die gestrichelte Linie 50 den unbelasteten Zustand der Abdeckscheibe 46 darstellt.

Die folgende beispielhafte Rechnung soll die Energieverteilung bei einem Aufprall des Prüfimpaktors 42 auf die Beleuchtungseinrichtung 40 erläutern. Bei dem Aufprall des Prüfimpaktors 42 weist dieser eine kinetische Energie von 150 J auf. Ein Abrollen des Prüfimpaktors berücksichtigend findet ein Energieeintrag in die Beleuchtungseinrichtung 40 von 100 J statt. Zum Brechen einer Befestigung 52 in einem Bereich 54 und zum Überwinden der Masseträgheit der gesamten Beleuchtungseinrichtung 2 werden 50 J aufgewendet. So verbleiben lediglich 50 J zur Verformung der Abdeckscheibe 46, was mit einer geringen Eindringtiefe 56 einhergeht. Darüber hinaus bewegt sich durch das Brechen der Befestigung 52 die Beleuchtungseinrichtung 40 aus ihrer Verbauposition 58 um einen Abstand 60.

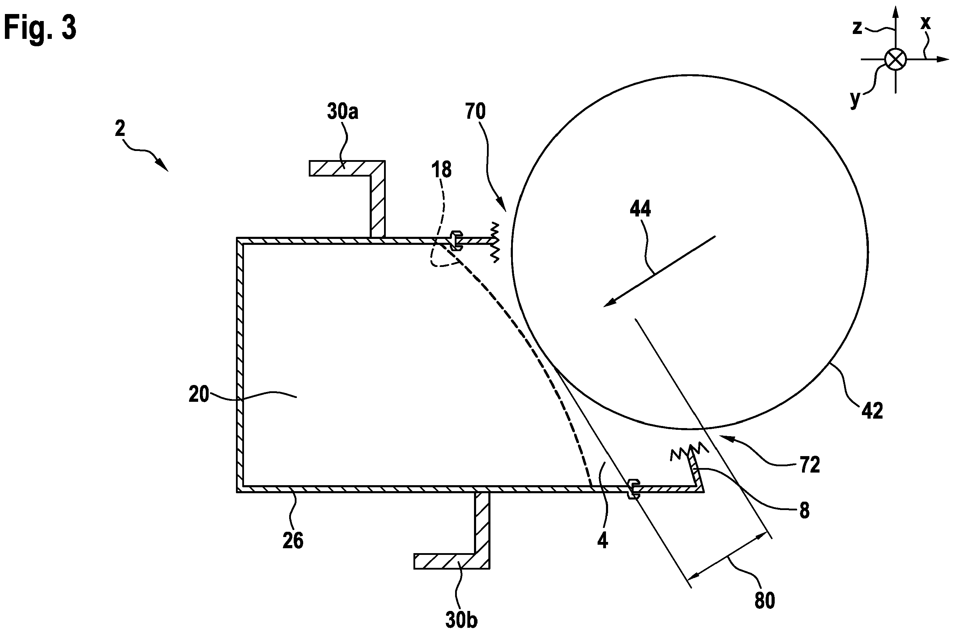

Figur 3 zeigt die Beleuchtungseinrichtung 2 aus Figur 1 in schematischer Form beim Aufprall des Prüfimpaktors 42. Der crash-relevante Bereich 4 bricht insbesondere in Bereichen 70 und 72 der Abdeckscheibe 8 auf und stellt dem Prüfimpaktor 42 eine große Eindringtiefe 80 bereit, die im Vergleich mit der Figur 2 wesentlich größer ist als die Eindringtiefe 56. Durch die Crash-feste Befestigung der Beleuchtungseinrichtung 2 mittels der Befestigungsvorrichtung 30 an dem Kraftfahrzeug wird der nicht crash-relevante Bereich 20 der Beleuchtungseinrichtung 2 bei Auftreffen des Impaktors 42 gegenüber dem Kraftfahrzeug nicht bewegt. Dadurch stehen anhand des vorangehend erläuterten Zahlenbeispiels 50 J mehr also insgesamt 100 J zur Verfügung, um entlang der in dem crash-relevanten Bereich 4 zur Verfügung stehenden Eindringtiefe den Aufprall abzudämpfen. Vielmehr bricht der crash-relevante Bereich 4 durch das Auftreffen des Impaktors 42 auf und stellt vorteilhaft die Eindringtiefe 80 zur Verfügung. So kann insbesondere der Energieeintrag voll für das Aufbrechen des crash-relevanten Bereichs 4 genutzt werden, was die Verletzungsgefahr reduziert.

Die Crash-Lastpfade 14 sind so ausgestaltet, dass wenn benachbarte Crash-Lastpfade 14 sich nicht gegenseitig nachteilhaft in Form einer Blockbildung beeinflussen. Dies wird beispielsweise durch ein teleskopartiges Zusammenschieben der beteiligten Elemente erreicht.

## Patentansprüche

1. Eine Beleuchtungseinrichtung (2) für eine Front eines Kraftfahrzeugs mit einer Befestigungsvorrichtung (30) zur Befestigung der Beleuchtungseinrichtung (2) an dem Kraftfahrzeug und einem crash-relevanten Bereich (4), **dadurch gekennzeichnet, dass** der crash-relevante Bereich (4) und die Befestigungsvorrichtung (30) derart aufeinander abgestimmt sind, dass zu einer Verformung des crash-relevanten Bereichs (4) eine geringere Formänderungsarbeit aufzubringen ist als zu einer Verformung der Befestigungsvorrichtung (30).

2. Die Beleuchtungseinrichtung (2) nach Anspruch 1, wobei zu der Verformung eines Crash-Lastpfades (14) des crash-relevanten Bereichs (4) eine geringere Formänderungsarbeit aufzubringen ist als zur Verformung der Befestigungsvorrichtung (30).

3. Die Beleuchtungseinrichtung (2) nach Anspruch 2, wobei der crash-relevante Bereich (4) entlang des Crash-Lastpfads (14) aufbrechbar ist.

4. Die Beleuchtungseinrichtung (2) nach einem der vorstehenden Ansprüche, wobei die Befestigungsvorrichtung (30) an einem nicht crash-relevanten Bereich (4) zur Verbindung der Beleuchtungseinrichtung (2) mit einer Karosserie des Kraftfahrzeugs angreift.

5. Die Beleuchtungseinrichtung (2) nach einem der vorstehenden Ansprüche, wobei mittels der Befestigungsvorrichtung (30) an einem Gehäuse (26) der Beleuchtungseinrichtung (2) die Beleuchtungseinrichtung (2) crash-fest mit dem Kraftfahrzeug verbindbar ist.

6. Die Beleuchtungseinrichtung (2) nach Anspruch 5, wobei die Befestigungsvorrichtung (30) Teil des Gehäuses (26) ist.

7. Die Beleuchtungseinrichtung (2) nach einem der vorstehenden Ansprüche, wobei ein erster Teil der Gesamtmasse der Beleuchtungseinrichtung (2), der auf den nicht crash-relevanten Bereich (20) der Beleuchtungseinrichtung (2) entfällt, größer ist als ein zweiter Teil der Gesamtmasse der Beleuchtungseinrichtung (2), der auf den crash-relevanten Bereich (4) entfällt.

8. Die Beleuchtungseinrichtung (2) nach dem Anspruch 7, wobei mehr als zwei Drittel der Gesamtmasse der Beleuchtungseinrichtung (2) auf den nicht crash-relevanten Bereich (20) der Beleuchtungseinrichtung (2) entfallen, und wobei weniger als ein Drittel der Gesamtmasse der Beleuchtungseinrichtung (2) auf den crash-relevanten Bereich (4) entfallen.

9. Die Beleuchtungseinrichtung (2) nach dem Anspruch 7, wobei mehr als drei Viertel der Gesamtmasse der Beleuchtungseinrichtung (2) auf den nicht crash-relevanten Bereich (20) der Beleuchtungseinrichtung (2) entfallen, und wobei weniger als ein Viertel der Gesamtmasse der Beleuchtungseinrichtung (2) auf den crash-relevanten Bereich (4) entfallen.

10. Die Beleuchtungseinrichtung (2) nach dem Anspruch 7, wobei mehr als vier Fünftel der Gesamtmasse der Beleuchtungseinrichtung (2) auf den nicht crash-relevanten Bereich (20) der Beleuchtungseinrichtung (2) entfallen, und wobei weniger als ein Fünftel der Gesamtmasse der Beleuchtungseinrichtung (2) auf den crash-relevanten Bereich (4) entfallen.
